# EUROPEAN PATENT APPLICATION

(11) **EP 3 413 517 A1**
(43) Date of publication of application: **12.12.2018**
(21) Application number: 17174575.5
(22) Date of filing: 06.06.2017
(51) Int. Cl.: H04L 12/40, H04L 29/12

(54) **METHOD TO DETERMINE SLAVE UNITS CONNECTED IN A LOCAL INTERCONNECT NETWORK**

(71) Applicant: Delphi France SAS, 95972 Roissy CDG Cedex (FR)
(72) Inventor: ZANIER, Eric, 75010 Paris (FR); PIRALI, Sylvain, 94130 Nogent-sur-Marne (FR)
(74) Representative: Robert, Vincent

(57) **Abstract**

A method of determining the identification numbers (DevIDs) of slave units which are connected to a master unit in a Local Interconnect Network (LIN) comprising the steps of: i) formulating a set of slave units under consideration, being an initial set comprising the set containing the identification numbers (DevIDs) of all possible connected slave units (S1); ii) sending a request to all connected slave units in said set to forward their identification number (Identification number (DevID)) to the master unit (S11); iii) determining whether no slaves, one slave, or plurality of slaves have replied (S12); iv) if there is a single response, storing the received Identification number (DevID) (S13).

## Description

### TECHNICAL FIELD

This invention relates to Local Interconnect Networks (LIN) and in particular to a method of determining the slave units (e.g. their identification or serial numbers) which are connected to the LIN.

### BACKGROUND OF THE INVENTION

A LIN (Local Interconnect Network) is a serial network protocol used for communication between components in vehicles and generally comprises a number of nodes/unit - one master node/unit and typically up to fifteen slave units/nodes). A LIN is thus includes broadcast serial /units which are e.g. vehicle components or sub-systems, and can be regarded as slave units/nodes controlled and co-ordinated by a master unit/node. The nodes are typically ECUs of sub-systems or vehicle components. Generally all messages are initiated by the master (e.g. ECU) node/unit with at most one slave replying to a given message identifier.

Currently when two nodes share the same LIN they have to have a different communication matrix to be able to communicate with master mode.

Each node must have specific IDs known by the master so as not to create a collision frame on the network and disturb the whole communication. If similar slave nodes (ECUs for example) are used on a single LIN, then a specific LIN addressing calibration needs to be performed on the LIN nodes and the master prior to installing them. Those addresses are generally programmed during the manufacturing sequence.

So essentially the master needs to know which slaves are plugged on its network to communicate with them; i.e. know the type of each node plugged in. The communication scheme is static Slave involved and has to be known and configured for proper communication. Hereinafter unless otherwise stated, reference to DevID (device identifier) is to a specific slave identification (e.g. serial) number. This Device Identifier has to be created in order to distinguish any manufactured ECU.

If similar ECUs (e.g. slave nodes) are used on the same network, they need to be calibrated separately in order to be distinguishable. Only a slave/ECU with a determined LIN address is able to answer in the LIN master frame of the LIN protocol. This causes problems.

LIN daisy chaining is possible where the ECU enables next ECUs access to LIN bus after being calibrated but this requires more wiring since for each LIN node as there is a requirement for a LIN-out and a LIN-in line.

The prior art is based on individual physical addressing of all the slave units/ ECUs connected to a LIN Master. This address learning is performed during the manufacturing sequence of each slave unit (ECU). For example the LIN slave being a SENSOR ECU has the address OXA7 to communicate with the Master

LIN; the Lighting ECU had the address OXB8 to communicate with the Master. Each address must be also known and stored in the Master via a calibration method. However this does not allow the possibility of connecting several LIN slave nodes (e.g.sensor ECUs) on the same LIN as the addressing is similar. There is currently no solution to distinguish identical slave/units (ECUs)

It is not possible for the master to send out a general request for slaves to respond by sending their serial numbers (DevIDs) are this causes collisions when more than one slave tries to respond. This ends up with "noise" or indecipherable input to the Master.

It is an object of the invention to provide a method for a master unit to identify all the slaves that are connected to it.

### SUMMARY OF THE INVENTION

In one aspect is provided a method of determining the identification numbers (DevIDs) of slave units which are connected to a master unit in a Local Interconnect Network (LIN) comprising the steps of:
i) formulating a set of slave units under consideration, being an initial set comprising the set containing the identification numbers (DevIDs) of all possible connected slave units;
ii) sending a request to all connected slave units in said set to forward their identification number (Identification number (DevID)) to the master unit;
iii) determining whether no slaves, one slave, or plurality of slaves have replied;
iv) if there is a single response, storing the received Identification number (DevID).

If it is determined in step iii) that more than one slave has responded, performing the following steps may be performed:
a) dividing the set under consideration into two sub-sets based on an attribute of the Identification number (DevID) ;
b) for each of said two sub-sets of step a) sending out at separate instances, a request for slaves falling within said sub-set to reply;
c) determining in each case of step b), whether no slaves, one slave, or plurality of slaves have replied;
d) if in step c) it is determined that with respect to either or both of said two subsets, more than one slave has responded, for each of said sub-sets where more than one slave has responded, setting said subset as the set under consideration and repeating steps a) to c).

For each subset found in steps b) and c) where more than one slave responds, repeatedly, the method may repeat steps b) and c) in a recursive fashion until there are no instances no instances of a plurality of slaves replying

If in step c) one save has replied, the method may store the said Identification number (DevID).

Said attribute is one or more digits of the binary form of the Identification number (DevID).

Said initial set of claim may be initially divided into two sets based on the last or first digit of the Identification number (DevID) being a "1" or "0".

Said steps d) the sub-sets may be divided into subsets based on the first or last two digits of the Identification number (DevID), being "00" and "10" and/or "11" and "10".

Said attribute may be a specific attribute of the last or first N digits of the binary form of the identification number (DevID), and where N increases by 1 each time the set under consideration is divided.

In instances where only one slave has replied, the method may involve sending a silence request, or initiating a silence mode, with respect to that slave.

In instances where one slave has replied the method may involve repeating the same request for identification numbers (DevID)

If no slaves respond, the method may terminating the process for that sub-set.

### BRIEF DESCRIPTION OF THE DRAWINGS

The present invention is now described by way of example with reference to the accompanying drawings in which:
Figure 1 shows a schematic diagram of a LIN system hardware showing a master unit (ECU) and a number of slave units (ECUs);
Figure 2 illustrates an example of the general process;
Figure 3 shows a basic flowchart of method steps (e.g. the master main process);
Figure 4 shows a more detailed flowchart of the methodology;
Figure 5 shows a flowchart of the process form the slave side;
Figures 6a, b, c, d shows an example of the methodology.

### DESCRIPTION OF THE PREFERRED EMBODIMENTS

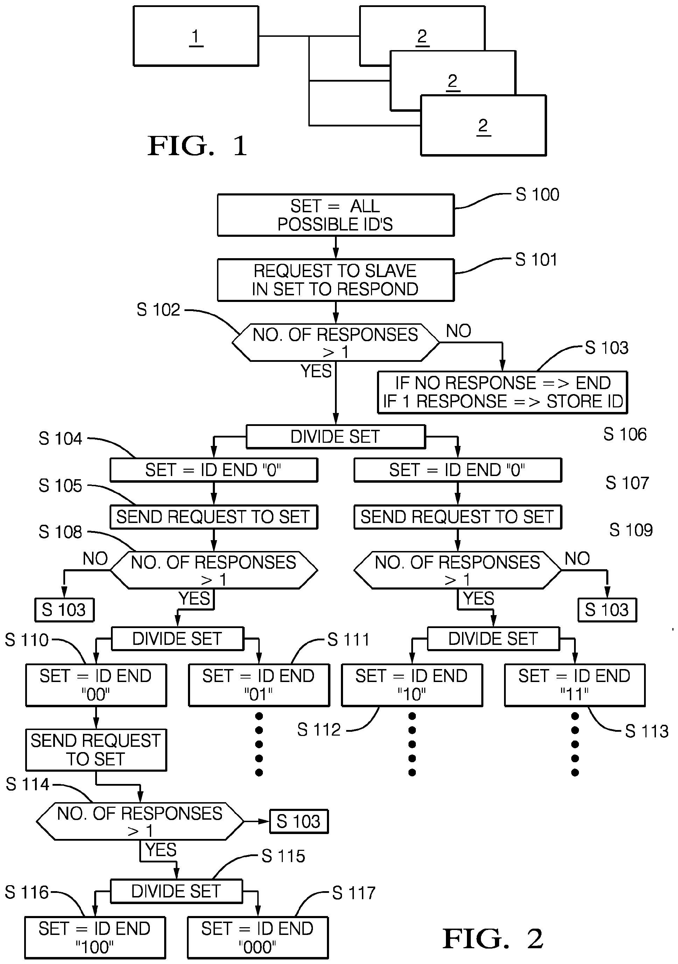

Figure 1 shows a schematic diagram of a LIN system hardware showing a master unit (ECU) 1 and a number of slave units (ECUs) 2 connected thereto.

In one example, on the master side, the master is tasked with determining which slaves (how many and their DevIDs e.g. such as serial numbers) are plugged into the network.

In a general methodology, the principle is to select a subset of answering ECU (slaves) to requesting response with their DevIDs, with an answer analysis process checking for non-answers and collision detection, where more than one slave tries to respond.

As mentioned in the introduction, slave unit only has to be distinguishable bya unique DevID defined by, for example the serial number, type, factory, and/or date code.

In one aspect is provided a method whereby the master unit selectively requests only those slave units with a specific DevID attribute to respond (a sub-set of all the connected slaves). So for example request only those slave whose DevID ends with a "0" to respond. Thus these slave units could be regarded as a subset of the whole set of slaves. This will generally result in either a) no response if there are no connected slaves with that attribute, ii) one understandable response (valid DevID returned) if there is only one slave with that attribute in its DevID, or iii) a collision where more than one slave with that attribute tries to respond. In the third case iii) the master will recognize the collision and then further divide the sub-set into a smaller sub (sub) sets by limiting the attribute further so for example, DevIDs that end in "00" and/or "10". This will be repeated by further dividing the sets until either no responses are received or only a single response is received. It should be noted that in some cases a quick responding slave may return a valid DevID even though more than one slave responds - in refinements this situation is accounted for.

So for example, if the serial numbers DevIDs are considered binary numbers, in an example the master may request all slaves whose serial numbers end with a "0" to reply with their DevIDs. If there is no response then the master is satisfied that no slave end their DevIDs with a "0", and will then later ask e.g. those that end with a "1" to respond. If in response to the initial request (DevIDs ending with "0"),one slave answers, the DevID transmitted by it will be recognised by the master as a valid DevID and registered - i.e. stored in memory. The master can then as before move on to determine connected those slaves whose DevID's end with "1".

If more than one slaves DevID end with a "0" then the result will be a collision which will be recognized. In such as case the master will limit this previous set to the subset "00", and then repeat the process by determining if there are any responses to the request that slave ending with this value transmit their DevIDs . If there is just one understandable response the master will register this slaves DevID. If there is no response then the master is satisfied no slave DevID end with a "00". If there is a collision then the master will further divide the set and send request for response of DevIDs for those slave whose DevIDs end in "000" and later those which end in "100". Where there is any collision, subset will continually be subdivided until no collision occurs. So to recap if the master sends out a request for those slaves with a particular DevID attribute e.g. ending with "00"and only one response is received, the response will be in the form of an understandable i, e coherent DevID. If there is a collision this will be recognized by the master (e.g. as noise). This process will be repeated for the sub-set where DevIDs finish with "10". Later the master will send a new request for response from the slaves whose DevIDs which end with "1" and repeat the process.

Generally speaking the original set is continually divided into two separate subsets, and slave responses for this slave set determined. The sub-sets will be repeatedly subdivided unit no collision occurs in the branch.

Figure 2 illustrates an example of the general process. Essentially the master will divide the whole set of possible DevIDs and continually subdivide until either a single response or no response has been received; i.e. until there are no collisions. The methodology can be regarded as a logical tree where, when considering the binary form of the slaves DevIDs, the set is are divided into two subsets of this set each time dependent on the attribute of the DevID address - the digits of the binary form of their DevID or serial number which becomes more specific (i.e. selective) at each branch. So each branch is divided into two branches where the set is divided into subsets by a more specific attribute of the DevID until no response is received or just a single response is received.

In step S100 the initial set is set to all possible slave DevIDs. In step S101 a request is sent to all the slave in the set for them to answer with DevIDs. In step S102 the number of responses is determined. If there is one or zero, the process moves to step S103, where if no response is received the process finishes; if there is 1 response this is registered i.e. memorized by the master.

If more than 1 response is received i.e. a collision the set is divided into two subsets at steps S104 and S105; those whose DevIDs end with binary form "0" and those that end with "1" respectively. In steps S106/S107 the master sends a request for all those in the subsets formed in step S104/S105 respectively to respond. The response is analyzed in steps S108 and S109 respectively as in step S103. Again is more than one response or a collision is determined in one or both cases, then the respective subsets with collisions are further divided into subsets by respective corresponding appropriate steps S110, S101, S102 and S103, where the sets are divided into those slaves whose DevID ends with "00" (S110), "01" (S111), "11" (S112) and "01" (S113). In any of these cases the process continues as in previous steps where the master send requests for DevID from slaves in the appropriate sub-sets to respond, e.g. step S114 in the example of step S110. If there are more than one response collision in this case (determined at step 115) the process continues with dividing the previous sets to one or two new subsets in steps S116 and S117 where the DevIDs are set to those which end with "100" and "000" respectively. In the cases where there is a single response, the master may command that slave to become "silent" whereby it ignores any request for its DevID to be sent; i.e. if its DevID has the attributes of the set in the request.

So in one aspect the master unit includes a network driver and protocol which allows "non-answers", single responses and answer collisions (reception error) from slaves to be detected and distinguished. - so the methodology allows selecting a subset of answering ECU correlated with an answer analysis checking for non-answers and collisions detection This will be described in greater detail hereinafter.

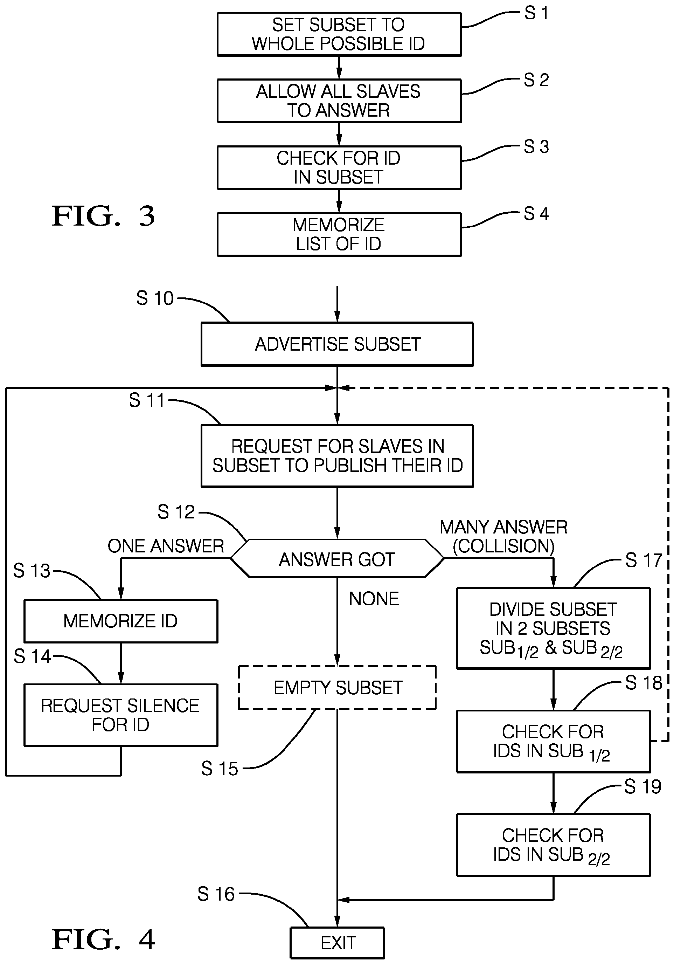

Figure 3 shows a basic flowchart of method steps (e.g. the master main process). In step S1 the "subset" is set to all possible connected slaves and request message is sent to all slaves; i.e. all the connected slave units to send their DevIDs. In other words, a message is sent to a first set, the set containing all possible DevIDs (connected slaves). In the next step S2 all the slaves are allowed to reply. In the next step S3 the master determines if there is a collision and if so will go through a process whereby subsequent messages are sent to specific subsets of the slaves until only one slave answers with its DevID or no reply is received. The detail of this step will be described hereinafter. In step S4 the master stores in memory the list of DevIDs for each subset.

Figure 4 shows a more detailed flowchart of the methodology. Essentially figure 4 illustrates step 3 in more detail. In step S10 the master will define (formulate) a set or subset. As mentioned this will initially be all possible connected slave DevIDs. Formulation of the set can be by selecting a particular attribute of DevID - e.g. those that end with "1" or "0" and in further steps those that end in "00" "01" "10 "11". In step S11 the master will send a request to all those slave in the set or subset to publish i.e. transmit back their DevIDs. In step S 12 the response will be determined. If it is determined there is only one answer, this DevID will be recorded by the master in step S 13. In step S 14 the master will send a request for the slave with that DevID not to respond to further queries regarding DevID. If an answer is received, it could mean that either only one slave with that attribute is connected or that the fastest responded. In order to account for this (i.e. that the fastest node replied (or that unique node replied) so subset has to be tested again disallowing the found DevID. In this case there is an option al feedback loop where the process is repeated with enforced silence form the found salve. At step S 15 if no answer is received that means no DevID belongs to this subset and the process finished at step S16. If collision is detected that means that at least 2 DevID belongs to the subset in question so the subset is divided in two smaller sets at step S17. In step S18 and S19 DevID's are checked in each sub-set and process is launched in those two sets until all DevIDs are found. The process steps in S18 and S 19 are similar to the above process and there may be a plurality of iterations/ DevID retrieval as the process is a recursive process refining sets of possible DevID. To illustrate this the flow chart shows dotted lines from steps S18 and S 19 to shows how the process can be iterative. On each step, master sets allows only a part of slaves to answer. It is to be noted that the process is repeated for each of the two subsets after division.

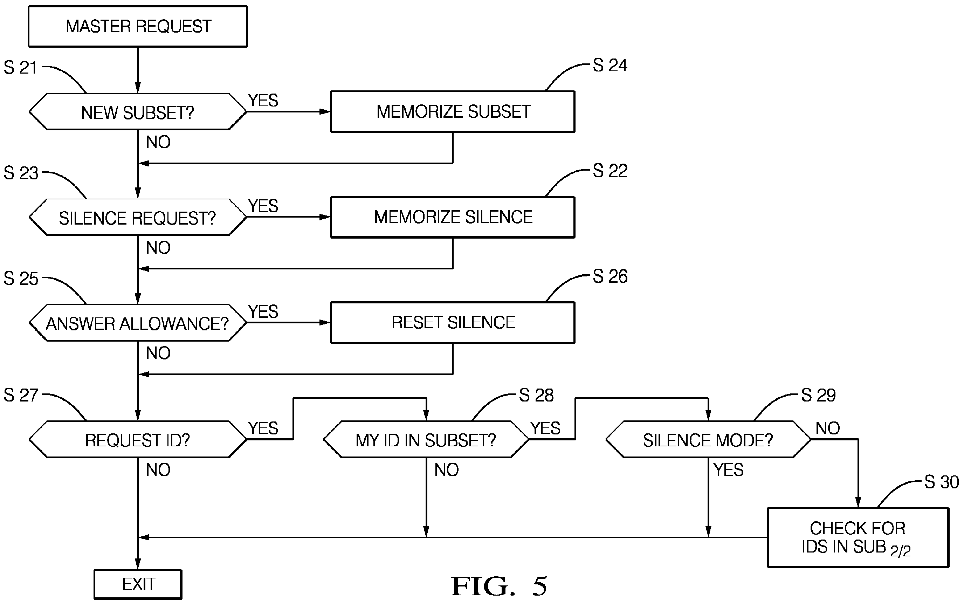

Figure 5 shows a flowchart of the process form the slave side. On the slave side, the slaves (slave ECUs) only filters answers (responds) on network back to the master if it has not been muted during detection and if its DevID belongs to the master subset. In step S20 a master request is made and received by the slave. In step 21 it is determined if this is a new subset; if so it is memorized at step S22. The process continues and at step S23 it is determined if is there is a silence request - if so at step S24 the silence is registered i.e. memorized by the slave, The process continues at step S25 to see if there is an answer allowance. If so the silence is reset (deleted) at step S26 and the process continues to step S27 where a valid "request DevID" query from the master is checked. If so then the process proceeds to step S28 where it is checked by the slave if its DevID is in the subset. If so then the slave will checked whether it is in silence mode in step S29. If not slave will publish i.e. transmit its DevID to the master at step S30.

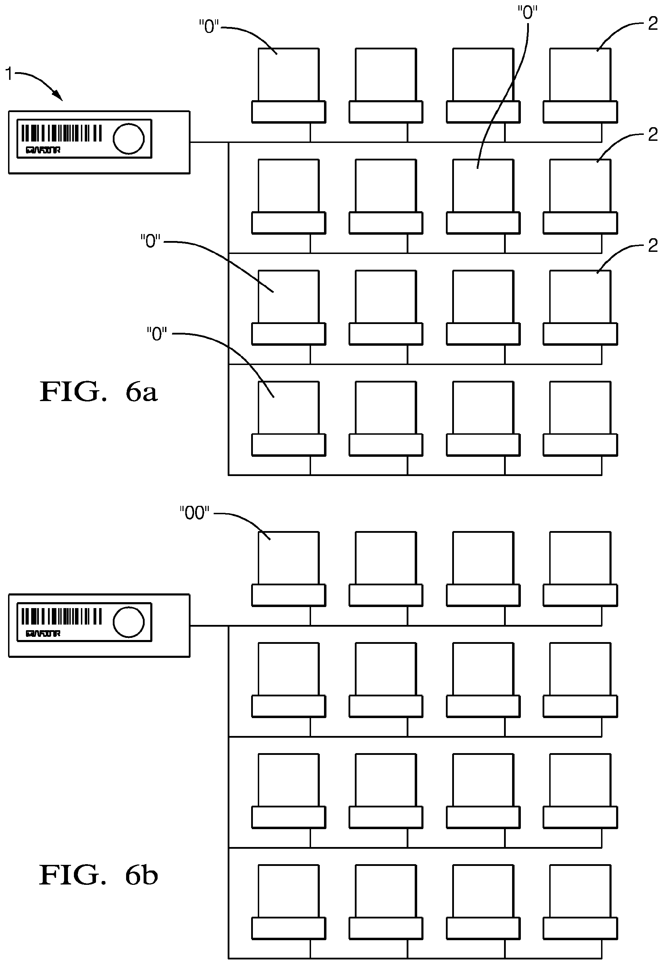

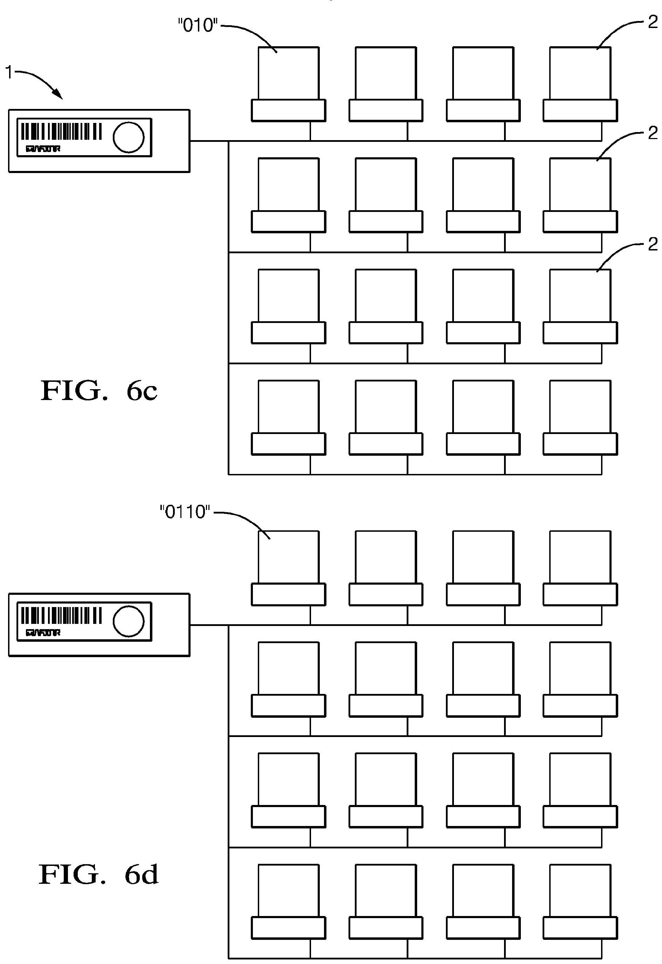

Figures 6a, b, c, d shows an example of the methodology. The figure shows a LIN network comprising a master unit 1 connected to a number of slave units, generally designated 2. In figure 6a shows a first step where the master checks all slave units whose DevID ends with "0" . There are four such units (marked with a "0")which means there is a collison. In figure 6b the master checks those slave whose DevID end with a "00" found. In the example one is found - shown marked with a "00". There follows a number of further steps where various subsets are defined by the ending of the DevID and requests to slaves which fall within these subsets are made for the slaves to respond.

For example in a fourth step shown in figure 6c the slaves with an DevID finishing with "010" are determined. In the example one is found. In a sixth step (see figure 6d) those slave shose DevIDs finishing with "0110" are determined - one is found as shown. In the example the request by the master results in no answer. Thus the method does not continue to look for DevIDs in the branch.

Table 1 belows lists the complete steps of determining the DevIDs of slave units in one example. As can be sets are contunually subdivided into subsets until there are no collisons. Thus the complete set is divided into two sets (branches) by the last digit of the DevID "1" or "0". These branches are then investigated by further dividing into sub-set (sub-branches) repeatedly by considering a further digit at the end of the DevID each time. Steps 1 to 21 look at all the subs-sets in the initial sub-branch where the attribute to select the subset is the last digit of any DevID being "0" and steps 22 onward for the correpsonding branch for DevID ending with "1".

**Table 1**

| | |
|---|---|
| 1 | Querying XXXXXXXXXXXXXXXXXXXXXXXXXXXXXXXXXXXX0 Collision |
| 2 | Querying XXXXXXXXXXXXXXXXXXXXXXXXXXXXXX00 Serial Found **0xE45D6288** |
| 3 | Querying XXXXXXXXXXXXXXXXXXXXXXXXXXXXXX10 Collision |
| 4 | Querying XXXXXXXXXXXXXXXXXXXXXXXXXXXXX010 Serial Found **0xD0E7A07A** |
| 5 | Querying XXXXXXXXXXXXXXXXXXXXXXXXXXXXX110 Collision |
| 6 | Querying XXXXXXXXXXXXXXXXXXXXXXXXXXXX0110 Dead Branch |
| 7 | Querying XXXXXXXXXXXXXXXXXXXXXXXXXXXX1110 Collision |
| 8 | Querying XXXXXXXXXXXXXXXXXXXXXXXXXXX01110 Dead Branch |
| 9 | Querying XXXXXXXXXXXXXXXXXXXXXXXXXXX11110 Collision |
| 10 | Querying XXXXXXXXXXXXXXXXXXXXXXXXXX011110 Collision |
| 11 | Querying XXXXXXXXXXXXXXXXXXXXXXXXX0011110 Dead Branch |
| 12 | Querying XXXXXXXXXXXXXXXXXXXXXXXXX1011110 Collision |
| 13 | Querying XXXXXXXXXXXXXXXXXXXXXXXX01011110 Collision |
| 14 | Querying XXXXXXXXXXXXXXXXXXXXXXX001011110 Collision |
| 15 | Querying XXXXXXXXXXXXXXXXXXXXXX0001011110 Dead Branch |
| 16 | Querying XXXXXXXXXXXXXXXXXXXXXX1001011110 Collision |
| 17 | Querying XXXXXXXXXXXXXXXXXXXXX01001011110 Serial Found **0x111B325E** |
| 18 | Querying XXXXXXXXXXXXXXXXXXXXX11001011110 Serial Found **0x0D84DE5E** |
| 19 | Querying XXXXXXXXXXXXXXXXXXXXXXX101011110 Dead Branch |
| 20 | Querying XXXXXXXXXXXXXXXXXXXXXXXX11011110 Dead Branch |
| 21 | Querying XXXXXXXXXXXXXXXXXXXXXXXXXX111110 Dead Branch |
| 22 | Querying XXXXXXXXXXXXXXXXXXXXXXXXXXXXXXX1 Collision |
| 23 | Querying XXXXXXXXXXXXXXXXXXXXXXXXXXXXXX01 Collision |
| 24 | Querying XXXXXXXXXXXXXXXXXXXXXXXXXXXXX001 Collision |
| 25 | Querying XXXXXXXXXXXXXXXXXXXXXXXXXXXX0001 Collision |
| 26 | Querying XXXXXXXXXXXXXXXXXXXXXXXXXXX00001 Dead Branch |
| 27 | Querying XXXXXXXXXXXXXXXXXXXXXXXXXXX10001 Collision |
| 28 | Querying XXXXXXXXXXXXXXXXXXXXXXXXXX010001 Serial Found **0xDBE7A151** |
| 29 | Querying XXXXXXXXXXXXXXXXXXXXXXXXXX110001 Serial Found **0x8B85CAF1** |
| 30 | Querying XXXXXXXXXXXXXXXXXXXXXXXXXXXX1001 Collision |
| 31 | Querying XXXXXXXXXXXXXXXXXXXXXXXXXXX01001 Serial Found **0xA1E40509** |
| 32 | Querying XXXXXXXXXXXXXXXXXXXXXXXXXXX11001 Serial Found **0xCBD83099** |
| 33 | Querying XXXXXXXXXXXXXXXXXXXXXXXXXXXXX101 Collision |
| 34 | Querying XXXXXXXXXXXXXXXXXXXXXXXXXXXX0101 Collision |
| 35 | Querying XXXXXXXXXXXXXXXXXXXXXXXXXXX00101 Serial Found **0xD449BF25** |
| 36 | Querying XXXXXXXXXXXXXXXXXXXXXXXXXXX10101 Serial Found **0xE31FEC35** |
| 37 | Querying XXXXXXXXXXXXXXXXXXXXXXXXXXXX1101 Dead Branch |
| 38 | Querying XXXXXXXXXXXXXXXXXXXXXXXXXXXXXX11 Collision |
| 39 | Querying XXXXXXXXXXXXXXXXXXXXXXXXXXXXX011 Dead Branch |
| 40 | Querying XXXXXXXXXXXXXXXXXXXXXXXXXXXXX111 Collision |
| 41 | Querying XXXXXXXXXXXXXXXXXXXXXXXXXXXX0111 Collision |
| 42 | Querying XXXXXXXXXXXXXXXXXXXXXXXXXXX00111 Collision |
| 43 | Querying XXXXXXXXXXXXXXXXXXXXXXXXXX000111 Serial Found **0x7BD69847** |
| 44 | Querying XXXXXXXXXXXXXXXXXXXXXXXXXX100111 Serial Found **0x97102D27** |
| 45 | Querying XXXXXXXXXXXXXXXXXXXXXXXXXXX10111 Collision |
| 46 | Querying XXXXXXXXXXXXXXXXXXXXXXXXXX010111 Serial Found **0x6430B6D7** |
| 47 | Querying XXXXXXXXXXXXXXXXXXXXXXXXXX110111 Serial Found **0x6BB868F7** |
| 48 | Querying XXXXXXXXXXXXXXXXXXXXXXXXXXXX1111 Collision |
| 49 | Querying XXXXXXXXXXXXXXXXXXXXXXXXXXX01111 Dead Branch |
| 50 | Querying XXXXXXXXXXXXXXXXXXXXXXXXXXX11111 Collision |
| 51 | Querying XXXXXXXXXXXXXXXXXXXXXXXXXX011111 Collision |
| 52 | Querying XXXXXXXXXXXXXXXXXXXXXXXXX0011111 Collision |
| 53 | Querying XXXXXXXXXXXXXXXXXXXXXXXX00011111 Collision |
| 54 | Querying XXXXXXXXXXXXXXXXXXXXXX000011111 Serial Found **0x920FCA1F** |
| 55 | Querying XXXXXXXXXXXXXXXXXXXXXXX100011111 Serial Found **0x4D64631F** |
| 56 | Querying XXXXXXXXXXXXXXXXXXXXXXXX10011111 Dead Branch |
| 57 | Querying XXXXXXXXXXXXXXXXXXXXXXXXX1011111 Dead Branch |
| 58 | Querying XXXXXXXXXXXXXXXXXXXXXXXXXX111111 Dead Branch |

Aspects provide a method to learn the list of ECU connected on the network and further allow the possibility to have similar ECU on the LIN either with creating a logical addressing of slave or using configurable slaves. An advantage of the solution is to offer a possibility to the Master ECU to know by an automatic solution which sensors are connected to the LIN Network. The MASTER can adapt its behavior and the slaves behavior so they can cope being on the same physical line.

This invention is providing method to list all ECU plugged on a LIN network. It is the first step to
dynamic node addressing of LIN modules; Logical addressing of LIN components and calibration of identical component while plugged together on the same network.

## Claims

1. A method of determining the identification numbers (DevIDs) of slave units which are connected to a master unit in a Local Interconnect Network (LIN) comprising the steps of:
i) formulating a set of slave units under consideration, being an initial set comprising the set containing the identification numbers (DevIDs) of all possible connected slave units;
ii) sending a request to all connected slave units in said set to forward their identification number (Identification number (DevID)) to the master unit;
iii) determining whether no slaves, one slave, or plurality of slaves have replied;
iv) if there is a single response, storing the received Identification number (DevID).

2. A method as claimed in claim 1 wherein if it is determined in step iii) that more than one slave has responded, performing the following steps:
a) dividing the set under consideration into two sub-sets based on an attribute of the Identification number (DevID) ;
b) for each of said two sub-sets of step a) sending out at separate instances, a request for slaves falling within said sub-set to reply;
c) determining in each case of step b), whether no slaves, one slave, or plurality of slaves have replied;
d) if in step c) it is determined that with respect to either or both of said two subsets, more than one slave has responded, for each of said sub-sets where more than one slave has responded, setting said sub-set as the set under consideration and repeating steps a) to c).

3. A method as claimed in claim 2 wherein for each subset in steps b) and c) where more than one slave responds, repeatedly, repeating steps b) and c) in a recursive fashion until there are no instances no instances of a plurality of slaves replying

4. A method as claimed in claim 2 or 3 wherein if in step c) one save has replied, storing the said Identification number (DevID).

5. A method as claimed in claims 2 to 4 wherein said attribute is one or more digits of the binary form of the Identification number (DevID).

6. A method as claimed in claims 2 to 4 wherein said initial set of claim 1 is initially divided into two sets based on the last or first digit of the Identification number (DevID) being a "1" or "0".

7. A method as claimed on claims 2 to 6 wherein said steps d) the sub-sets are divided into subsets based on the first or last two digits of the Identification number (DevID), being "00" and "10" and/or "11" and "10".

8. A method as claimed in claims 1 to 7 wherein said attribute is a specific attribute of the last or first N digits of the binary form of the identification number (DevID), and where N increases by 1 each time the set under consideration is divided.

9. A method as claimed in any previous claim including the step of, in instances where only one slave has replied, sending a silence request, or initiating a silence mode, with respect to that slave.

10. A method as claimed in claims 1 to 8 wherein in instances where one slave has replied, repeating the same request for identification numbers (DevID)

11. A method as claimed in claims 1 to 10 where if no slaves respond, terminating the process for that sub-set.
